# EUROPEAN PATENT SPECIFICATION

(11) **EP 0 996 103 B1**
(45) Date of publication and mention of the grant of the patent: **13.08.2003**
(21) Application number: 98917749.8
(22) Date of filing: 30.04.1998
(51) Int. Cl.: G07F 9/00, G07F 9/02, G05B 19/042, G06F 9/445, G06F 11/14

(54) **AUTOMATIC VENDING MACHINE**
VERKAUFSAUTOMAT
DISTRIBUTEUR AUTOMATIQUE

(43) Date of publication of application: 26.04.2000
(73) Proprietor: FUJI ELECTRIC CO., LTD., Kawasaki-shi, Kanagawa-ken (JP)
(72) Inventor: MARUYAMA, Toshitake, Saitama-ken 360-0026 (JP)
(74) Representative: Leitner, Waldemar, Dr. techn.
(86) International application number: JP9801990
(87) International publication number: WO99057691

(56) References cited:
- EP-A- 0 489 227
- WO-A-90/01199
- WO-A-96/13814
- DE-A- 4 321 381
- GB-A- 2 244 584
- JP-A- 3 154 922
- JP-A- 5 217 052
- JP-A- 6 289 911
- US-A- 4 598 379
- US-A- 5 418 837
- US-A- 5 619 734

## Description

### TECHNICAL FIELD

The present invention relates to an automatic vending machine, and more particularly to an automatic vending machine of this kind, which can rewrite an integrated control program of a main control unit thereof.

### BACKGROUND ART

Automatic vending machines currently in use are each formed of a plurality of component parts, such as a coin mechanism control unit, a customer service control unit, a sales control unit, a data loader control unit, and an option control unit. Each of the component parts is provided with a CPU which individually controls the component part relevant thereto. These control units are connected by way of serial communication to a main control unit comprised of a CPU which is different from the CPU's of the control units, so that each of these component parts functions in response to a command from the main control unit. The main control unit not only controls these component parts but also has several specific functions. A program to determine the operations of the main control unit is defined as an integrated control program, according to the present invention.

Conventionally, the integrated control program for controlling the automatic vending machine is written in an EPROM. Therefore, when the integrated control program is changed due to a change in the specification of the machine, the following steps are carried out: That. is, the EPROM is once removed from the substrate, and then inserted into an ultraviolet eraser to erase the program. Further, the thus erased EPROM is set into a ROM writer to write a new program therein, followed by mounting the rewritten EPROM on the substrate again. Another manner to change the program is to produce a new ROM for replacement, which stores therein a new program, in a factory etc. beforehand. The thus produced ROM is substituted for the original ROM at the installation site of the machine.

Recently, ROM's and ROM writers which can cope with high-speed writing have been developed, however, some kinds of automatic vending machines employ ROM's with 4 Mb, and therefore it takes over ten minutes to'write data into these large-capacity ROM's.

Thus, disadvantageously, it takes a considerable time period to detach and attach the ROM and to perform erasing and writing of the contents of the ROM. Therefore, in order to change the specification of a great number of automatic vending machines which have been already set and in service, enormous amounts of time is consumed.

US-A-5,418,837 discloses a mobile telephone, which can be considered as some kind of automatic vending machine because transactions are performed through SMS, having a plurality of component parts forming the same, and a main control unit for communicating with said component parts and integratedly controlling said component parts, wherein said main control unit comprises a main control section, a rewritable memory device storing an integrated control program, and a ROM card connector, said main control unit being responsive to connection to said ROM card connector, functioning to read integrated control program stored in said ROM card and to rewrite said integrated control program stored in said memory device according to said integrated control program stored in said ROM card.

US-A-5,619,734 discloses a programmable controller apparatus, and a method for operating a programmable controller apparatus, which does not require as sequence program to initialize the device memory at the start of operation of the programmable controller apparatus. Further, the apparatus and method both allow the contents of the device memory of the programmable controller to be changed at a specified time, during a simulation operation, or when data at a predetermined address of the device memory represents a predetermined value. The programmable controller operates based on the contents of the device memory, and comprises a second memory for sequentially storing data including address data indicating a first address of the device memory and write data to be written to a predetermined number of addresses of the device memory beginning at the first address, and a memory changing device for changing the contents of the device memory in accordance with the data stored in the second memory. The memory changing device changes the contents of the device memory when operation of the programmable controller begins, at a predetermined time, or when a predetermined address of the device memory represents a predetermined value.

The present invention has been proposed to provide an automatic vending machine which eliminates bothersome tasks of detachment and attachment of a ROM, and is capable of performing transcription of a new integrated control program in a short time period only by inserting a RAM card into the automatic vending machine, whereby the rewriting of the integrated control program can be postponed so that the change does not influence the sales and the operation of the machine.

### DISCLOSURE OF THE INVENTION

This object is achieved according to the present invention by providing an automatic vending machine having a plurality of component parts forming the same, and a main control unit for communication with component parts and integratedly controlling the component parts, wherein the main control unit comprises a main control section, a rewritable memory device storing an integrated control program, and a RAM card connector, the main control unit responsive to connection of a RAM card to the RAM card connector, functioning to read an integrated control program stored in the RAM card and to rewrite the integrated control program stored in the memory device according to the integrated control program stored in the RAM card when a set time point is reached, wherein the specific time point is a time point at which a frequency of sales operation of the automatic vending machine is low, the time point being calculated by a program written in the memory device, based on past sales performance of the automatic vending machine, the memory device storing therein a program for reading the integrated control program written in the RAM card at the calculated time point, to thereby write the same on the memory device.

Preferably, the nonvolatile RAM is a flash memory. Also preferably, in the aforementioned automatic vending machine, the set time point is written in the RAM card, the memory device storing therein a program for reading the set time point written in the RAM card, and for reading the integrated control program written in the RAM card when the set time point is reached, to thereby write the integrated control program on the memory device.

In addition, in the aforesaid automatic vending machine, the specific time point is a time point at which a frequency of sales operation of the automatic vending machine is low, the time point being calculated by a program written in the memory device, based on past sales performance of the automatic vending machine, the. memory device storing therein a program for reading the integrated control.program written in the RAM card at the calculated time point, to thereby write the same on the memory device.

### BRIEF EXPLANATION OF THE DRAWINGS

Fig. 1 is a block diagram of a main control unit for an automatic vending machine according to the present invention;
Fig. 2 is a descriptive drawing showing one embodiment, where a format of a memory in the main control unit according to the present invention is explained;
Fig. 3 is a descriptive drawing showing a format of data (program) stored in a RAM card according to the present invention;
Fig. 4 is a flowchart for rewriting an integrated control program at a designated time point; and
Fig. 5 is a flowchart for calculating a rewriting time point, based on sales forecast, and for rewriting the integrated control program at the time point.

### BEST MODE FOR CARRYING OUT THE INVENTION

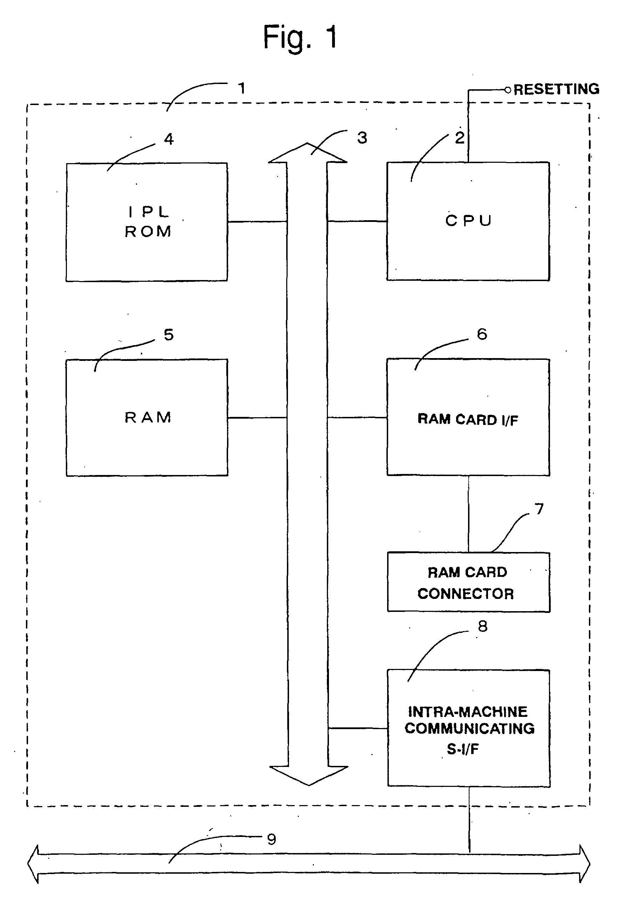

Fig. 1 schematically shows a main control unit. The main control unit 1 is comprised of a parallel bus 3, a CPU 2, a ROM 4 and a nonvolatile RAM 5 both forming a memory device, a RAM card interface 6, a RAM card connector 7, and an intra-machine communicating serial interface 8. The CPU 2, the ROM 4, the nonvolatile RAM 5, the RAM card interface 6, and the intra-machine communicating serial interface 8 are connected to the parallel bus 3. The CPU 2 integratedly controls these component elements, through the parallel bus.

Connected to the RAM card interface 6 is the RAM card connector 7, and by inserting and connecting a RAM card to the connector 7, the main control unit 1 can read the contents of the RAM card.

The serial interface 8 for communication within the automatic vending machine is connected to a serial bus 9 through which the main control unit 1 communicates with respective component parts forming the automatic vending machine and controls the same.

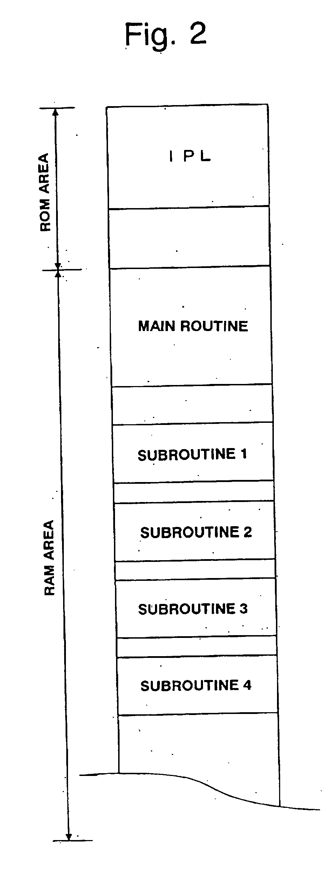

Fig. 2 shows a typical example of a format of a memory device recognized by the CPU 2. In a ROM area of the memory, an address of the above ROM 4 is located, while an address of the nonvolatile RAM 5 is located in a RAM area. In the ROM area, an IPL (initial program loader) program is written, while in the RAM area, an integrated control program of the automatic vending machine is expanded. The integrated control program of the automatic vending machine consists of a main routine and several subroutines called by the main routine. Further, in the RAM area, data areas and areas for storing variables such as stacks are preset.

When the CPU 2 is reset, control of the program is transferred to the top of the ROM area where the IPL program is written. The IPL program functions to read a program written in the RAM card through the RAM card interface 6 and the RAM card connector 7, and to locate the read program at a designated (or preset) address in the RAM area.

Therefore, if the program for integratedly controlling the automatic vending machine is written into the RAM card, only by connecting the RAM card to the RAM card connector 7 and resetting operation is carried out, the integrated control program for controlling the automatic vending machine, which has been read from the RAM card, is expanded on the nonvolatile RAM 5. Then, the control is transferred to the RAM, whereby the new integrated control program is started.

When the automatic vending machine is manufactured, shipped, or installed at the site, or alternatively when the integrated control program is immediately changed, the above described process is carried out.

The RAM area is formed by a nonvolatile memory, such as a flash memory, and therefore the contents thereof are not erased even at immediate interruption of a power source or transfer of the installation site of the machine.

The IPL program is a simple program which functions only to read the integrated control program from the RAM card and to expand the read program on the RAM. Therefore, there is little probability to change the IPL program per se or to debug the program. On the other hand, the integrated control program of the automatic vending machine is changed on not a few occasions, due to a change in needs of users, a change in needs of customers, improved programs, debugs, etc.

On these occasions, if the program has to be immediately changed, a service engineer can cope with the change only by bringing the RAM card which stores therein the new program for integratedly controlling the automatic vending machine, connecting the card to the connector 7, and pressing a reset button, as mentioned before.

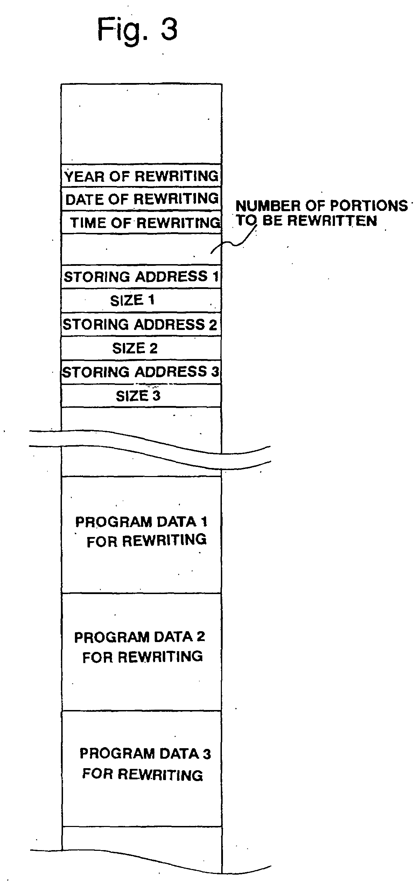

Fig. 3 shows an example of a format of data stored in the RAM card. At predetermined locations on the RAM card, the year to be rewritten, the date to be rewritten, the time to be rewritten, and the number of portions to be rewritten are stored. Following to these data, a plurality of sets of data consisting of an address recognized by the CPU 2, at which the rewritten program is to be located, and the size of the program are arranged corresponding in number to the number of the portions for rewriting. Following thereto, programs for rewriting are stored corresponding in number to the number of the portions to be rewritten.

The program for rewriting, stored in the RAM card, may be the entire of the main routine or the subroutines, or alternatively it may be only a portion containing a change, i.e. part of the routine.

The year, the date, and the time to be rewritten are disregarded if the change of the integrated control program is performed by resetting. On the other hand, in some cases, the integrated control program is required to be changed not immediately but upon change of the date, or when the change does not influence the sales of the machine. In such cases, the integrated control program should be changed at a specifically set time point.

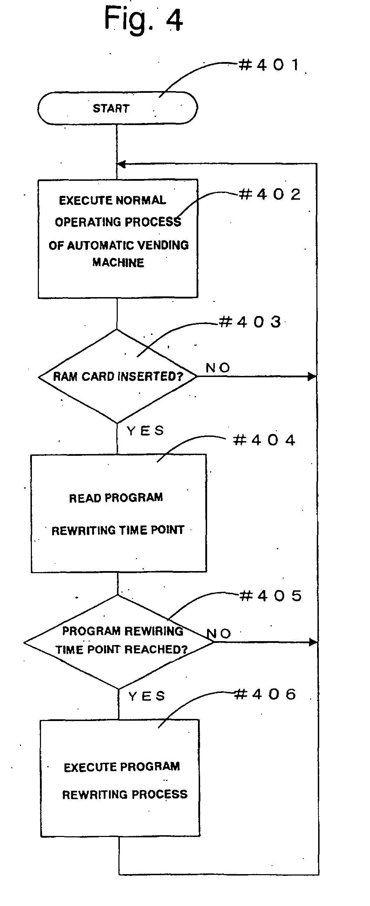

Fig. 4 is a flowchart showing a program for changing the integrated control program at a designated time point, by using the above-mentioned data of the year, the date, and the time to be changed.

First, the present program is started by resetting or inputting a power source, at a step #401.

After the start, if the RAM card is inserted into .and connected to the connector 7, reading of the integrated control program and storage of the same are carried out, as mentioned before, to thereby execute the integrated control program. In Fig. 4, these processes are omitted, and therefore the flowchart mainly shows a process executed after rising of the integrated control program.

Then, the program proceeds to a step #402, wherein a normal operating process of the automatic vending machine is executed, i.e. the machine carries out normal automatic vending. Thereafter, it is checked at a step #403 whether or not the RAM card is connected. If the RAM card is connected, a time point at which the program is to be rewritten is read at a step #404. Then, it is checked at a step #405 whether or not the time point for rewriting is reached, and if the time point is reached, the program is read, to thereby execute a rewriting process of the program at a step #406.

When the rewriting process has been completed, when the time point for rewriting the program has not been reached, or when the RAM card is not connected, the program returns to the step #403, wherein the operation process is repeatedly executed.

If the program rewriting process at the step #406 is expanded in the RAM area, there is a possibility that the process rewrites itself during execution of its routine, which is unsafe. Further, the program rewriting process is a simple program (almost similar to the IPL program) which is rarely required to be debugged. Therefore, the program rewriting process alone may be stored in the ROM area.

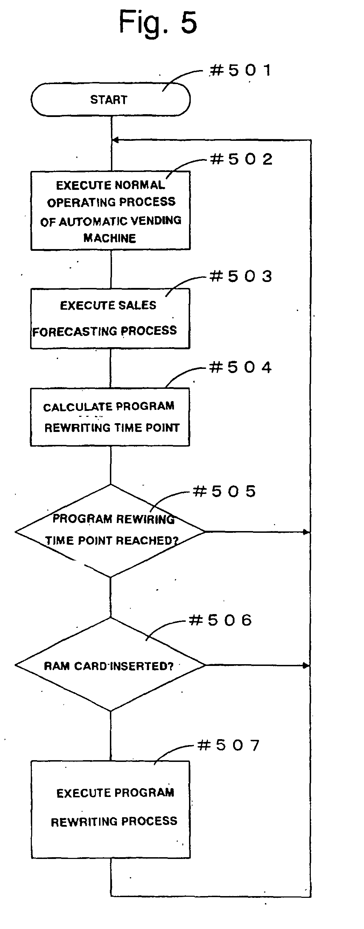

Fig. 5 is a flowchart showing a program for rewriting the integrated control program at a time point at which the operation of the automatic vending machine is relatively off-peak, according to another embodiment of the invention. Although in the first embodiment, the program rewriting time point is designated, the time point is not designated in the present embodiment. More specifically, in the present embodiment, the rewriting process of the integrated control program is automatically carried out at a more suitable time point.

The program in the present embodiment is the same as in the first embodiment from the start thereof (#501) to execution of the normal operation process of the automatic vending machine (#502).

Thereafter, it is calculated at a step #504 at which time the availability factor (sales frequency) of the automatic vending machine falls, based on sales performance data accumulated in the machine.

Then, it is determined at a step #505 whether or not the calculated time point is reached.

If the time point is reached, it is checked at a step #506 whether or not the RAM card is connected.

If the RAM card is connected, the program rewriting process is carried out at a step #507, followed by the program returning to the automatic vending machine normal operation process at the step #502.

On the other hand, if the program rewriting time point has not been reached or the RAM card is not connected, the program returns to the automatic vending machine operation process at the step #502, similarly to the step #507.

Although in the aforestated description (at the step #401 in Fig. 4), the program is started by resetting or inputting the power source, the program may be started when the RAM card is initially connected.

### INDUSTRIAL APPLICABILITY

According to the present invention, an integrated control program thereof is not executed on a ROM as in conventional automatic vending machines, and therefore when the integrated control program is changed, bothersome tasks of detachment and attachment of a ROM is dispensed with. The program can be replaced by a new one in a very short . time period, simply by connecting a RAM card to a connector of the automatic vending machine and pressing a reset button, which can bring about an advantageous effect.

Further, if a time point for rewriting the program is designated, the rewriting process is automatically executed at the designated time point, and therefore a burden on a service engineer is reduced, which is also an advantageous effect of the invention. Still further, the automatic vending machine calculates a time point which is. suitable for carrying out the rewriting process, and the machine automatically executes the rewriting process when the time point is reached, whereby the burden on the service engineer can be further reduced.

## Claims

1. An automatic vending machine having a plurality of component parts forming the same, and a main control unit (1) for communication with said component parts and integratedly controlling said component parts:
wherein said main control unit (1) comprises a main control section (2), a rewritable memory device storing an integrated control program, and a RAM card connector (7);
said main control unit responsive to connection of a RAM card to said RAM card connector (7), functioning to read an integrated control program stored in said RAM card and to rewrite said integrated control program stored in said memory device according to said integrated control program stored in said RAM card when a set time point is reached;
wherein said specific time point is a time point at which a frequency of sales operation of said automatic vending machine is low, said time point being calculated by a program written in said memory device, based on past sales performance of said automatic vending machine, said memory device storing therein a program for reading said integrated control program written in said RAM card at said calculated time point, to thereby write said integrated control program on said memory device.

2. An automatic vending machine having a plurality of component parts forming the same, and a main control unit (1) for communicating with said component parts and integratedly controlling said component parts:
wherein said main control unit (1) comprises a parallel bus (3);
a CPU (2) connected to said parallel bus (3);
a ROM (4) connected to said parallel bus (3) and located on an address space of said CPU (2);
a nonvolatile RAM (5) connected to said parallel bus and located on an address space of said CPU (2);
a serial interface (8) connected to said parallel bus (3), for communicating with each of said component parts;
a RAM card interface (6) connected to said parallel bus (3)
and
a RAM card connector (7) connected to said RAM card interface (6);
said ROM (4) storing therein a program, said program responsive to connection of a RAM card to said RAM card connector (7), for reading an integrated control program stored in said RAM card and expanding the same on said nonvolatile RAM (5) when a set time point is reached;
wherein said specific time point is a time point at which a frequency of sales operation is low, said time point being calculated by a program written in said nonvolatile RAM (5) or said ROM (4) based on past sales performance of said automatic vending machine, said nonvolatile RAM (5) or said ROM (4) storing therein a program for reading said integrated control program written in said RAM card at said calculated time point, to thereby expand said integrated control program on said RAM (5).

3. An automatic vending machine as claimed in claim 2, wherein said nonvolatile RAM (5) is a flash memory.

4. An automatic vending machine as claimed in claim 1, wherein said set time point is written in said RAM card, said memory device storing therein the program for reading said set time point written in said RAM card, and for reading said integrated control program written in said RAM card when said set time point is reached.

5. An automatic vending machine as claimed in claim 2 or 3, wherein said set time point is written in said RAM card, said nonvolatile RAM (5) or said ROM (4) storing therein a program for reading said set time point written in said RAM card, and for reading said integrated control program written in said RAM card when said set time point is reached, to thereby expand said integrated control program on said RAM.

## Patentansprüche

1. Verkaufsautomat mit einer Mehrzahl von denselben bildenden Komponententeilen sowie einer Hauptsteuereinheit (1) zur Kommunikation mit den Komponententeilen und integrierten Steuerung der Komponententeile:
bei dem die Hauptsteuereinheit (1) einen Hauptsteuerteil (2), eine ein integriertes Steuerprogramm speichernde wiederbeschreibbare Speichervorrichtung und einen RAM-Karten-Verbinder (7) umfasst;
bei dem die Hauptsteuereinheit auf eine Verbindung einer RAM-Karte mit dem RAM-Karten-Verbinder (7) anspricht,
wobei sie arbeitet, um ein in der RAM-Karte gespeichertes integriertes Steuerprogramm zu lesen und das in der Speichervorrichtung gespeicherte integrierte Steuerprogramm entsprechend dem in der RAM-Karte gespeicherten integrierten Steuerprogramm zu überschreiben, wenn ein eingestellter Zeitpunkt erreicht wird;
bei dem der spezielle Zeitpunkt ein Zeitpunkt ist, an dem eine Frequenz eines Verkaufsbetriebs des Verkaufsautomaten niedrig ist, wobei der Zeitpunkt auf der Grundlage eines zurückliegenden Verkaufsverhaltens des Verkaufsautomaten von einem in die Speichervorrichtung geschriebenen Programm berechnet wird, wobei die Speichervorrichtung darin ein Programm speichert, um das in die RAM-Karte geschriebene integrierte Steuerprogramm an dem berechneten Zeitpunkt zu lesen, um dadurch das integrierte Steuerprogramm auf die Speichervorrichtung zu schreiben.

2. Verkaufsautomat mit einer Mehrzahl von denselben bildenden Komponententeilen sowie einer Hauptsteuereinheit (1) zur Kommunikation mit den Komponententeilen und integrierten Steuerung der Komponententeile:
bei dem die Hauptsteuereinheit (1) umfasst:
einen parallelen Bus (3) ;
eine CPU (2), die mit dem parallelen Bus (3) verbunden ist;
einen ROM (4), der mit dem parallelen Bus (3) verbunden ist und auf einem Adressraum der CPU (2) angeordnet ist;
einen nicht-flüchtigen RAM (5), der mit dem parallelen Bus verbunden und auf einem Adressraum der CPU (2) angeordnet ist;
eine serielle Schnittstelle (8), die mit dem parallelen Bus (3) verbunden ist, zum Kommunizieren mit jedem der Komponententeile;
eine RAM-Karten-Schnittstelle (6), die mit dem parallelen Bus (3) verbunden ist,
und
einen RAM-Karten-Verbinder (7), der mit der RAM-Karten-Schnittstelle (6) verbunden ist;
wobei der ROM (4) darin ein Programm speichert, wobei das Programm auf eine Verbindung einer RAM-Karte mit dem RAM-Karten-Verbinder (7) anspricht, um ein in der RAM-Karte gespeichertes integriertes Steuerprogramm zu lesen und dasselbe auf den nicht-flüchtigen RAM (5) zu erweitern, wenn ein eingestellter Zeitpunkt erreicht wird;
wobei der spezielle Zeitpunkt ein Zeitpunkt ist, an dem eine Frequenz eines Verkaufsbetriebs niedrig ist, wobei der Zeitpunkt auf der Grundlage eines zurückliegenden Verkaufsverhaltens des Verkaufsautomaten von einem in den nicht-flüchtigen RAM (5) oder den ROM (4) geschriebenen Programm berechnet wird, wobei der nicht-flüchtige RAM (5) oder der ROM (4) darin ein Programm speichert, um das in die RAM-Karte geschriebene integrierte Steuerprogramm an dem berechneten Zeitpunkt zu lesen, um dadurch das integrierte Steuerprogramm auf den RAM (5) zu erweitern.

3. Verkaufsautomat nach Anspruch 2, bei dem der nicht-flüchtige RAM (5) ein Flash-Speicher ist.

4. Verkaufsautomat nach Anspruch 1, bei dem der eingestellte Zeitpunkt in die RAM-Karte geschrieben ist, wobei die Speichervorrichtung darin das Programm speichert, um den in die RAM-Karte geschriebenen eingestellten Zeitpunkt zu lesen, und um das in die RAM-Karte geschriebene integrierte Steuerprogramm zu lesen, wenn der eingestellte Zeitpunkt erreicht ist.

5. Verkaufsautomat nach Anspruch 2 oder 3, bei dem der eingestellte Zeitpunkt in die RAM-Karte geschrieben ist, wobei der nicht-flüchtige RAM (5) oder der ROM (4) darin ein Programm speichert, um den in die RAM-Karte geschriebenen eingestellten Zeitpunkt zu lesen, und um das in die RAM-Karte geschriebene integrierte Steuerprogramm zu lesen, wenn der eingestellte Zeitpunkt erreicht ist, um dadurch das integrierte Steuerprogramm auf den RAM zu erweitern.

## Revendications

1. Distributeur automatique possédant plusieurs parties constitutives formant le premier cité et une unité de commande principale (1) à des fins de communication avec lesdites parties constitutives et assurant une commande intégrée desdites parties constitutives :
dans lequel ladite unité de commande principale (1) comprend une section de commande principale (2), un dispositif de mémoire réenregistrable dans lequel est mémorisé un programme de commande intégrée et un connecteur de carte mémoire programme vive (7) ;
ladite unité de commande principale sensible à la connexion d'une carte mémoire programme vive audit connecteur de carte mémoire programme vive (7) fonctionnant pour lire un programme de commande intégrée mémorisée dans ladite carte mémoire programme vive et pour réenregistrer ledit programme de commande intégrée mémorisé dans le ledit dispositif de mémoire conformément audit programme de commande intégrée mémorisé dans ladite carte mémoire programme vive lorsqu'un moment de consigne est atteint ;
dans lequel ledit moment spécifique représente un moment auquel la fréquence d'opérations de ventes dudit distributeur automatique est faible, ledit moment étant calculé par un programme enregistré dans ledit dispositif de mémoire en se basant sur des performances de ventes antérieures dudit distributeur automatique, un programme pour lire ledit programme de commande intégrée enregistré dans ladite carte mémoire programme vive audit moment calculé étant mémorisé dans ledit dispositif de mémoire, pour ainsi enregistrer ledit programme de commande intégrée sur ledit dispositif de mémoire.

2. Distributeur automatique possédant plusieurs parties constitutives formant le premier cité et une unité de commande principale (1) à des fins de communication avec lesdites parties constitutives et assurant une commande intégrée desdites parties constitutives :
dans lequel ladite unité de commande principale (1) comprend un bus parallèle (3) ;
une CPU (2) connectée audit bus parallèle (3) ;
une mémoire morte (4) connectée audit bus parallèle (3) et disposée sur un espace d'adresse de ladite CPU (2) ;
une mémoire vive non volatile (5) connectée audit bus parallèle et disposée sur un espace d'adresse de ladite CPU (2) ;
une interface série (8) connectée audit bus parallèle (3) à des fins de communication avec chacune desdites parties constitutives ;
une interface carte mémoire programme vive (6) connectée audit bus parallèle (3) ;
et
un connecteur de carte mémoire programme vive (7) connecté à ladite interface de carte mémoire programme vive (6) ;
un programme étant mémorisé dans ladite mémoire morte (4), ledit programme étant sensible à une connexion d'une carte mémoire programme vive audit connecteur de carte mémoire programme vive (7) dans le but de lire un programme de commande intégrée mémorisé dans ladite carte mémoire programme vive et d'étendre ledit programme sur ladite mémoire vive non volatile (5) lorsqu'un moment de consigne est atteint,
dans lequel ledit moment spécifique représente un moment auquel la fréquence d'opérations de ventes est faible, ledit moment étant calculé par un programme enregistré dans ladite mémoire vive non volatile (5) ou dans ladite mémoire morte (4) en se basant sur des performances de ventes antérieures dudit distributeur automatique, un programme pour lire ledit programme de commande intégrée enregistré dans ladite carte mémoire programme vive audit moment calculé étant mémorisé dans ladite mémoire vive non volatile (5) ou dans ladite mémoire morte (4), pour ainsi étendre ledit programme de commande intégrée sur ladite mémoire vive (5).

3. Distributeur automatique selon la revendication 2, dans lequel ladite mémoire vive non volatile (5) est une mémoire instantanée.

4. Distributeur automatique selon la revendication 1, dans lequel ledit moment de consigne est enregistré dans ladite carte mémoire programme vive, le programme pour lire ledit moment de consigne enregistré dans ladite carte mémoire programme vive et pour lire ledit programme de commande intégrée enregistré dans ladite carte mémoire programme vive lorsque ledit moment de consigne est atteint étant mémorisé dans ledit dispositif de mémoire.

5. Distributeur automatique selon la revendication 2 ou 3, dans lequel ledit moment de consigne est enregistré dans ladite carte mémoire programme vive, un programme pour lire ledit moment de consigne enregistré dans ladite carte mémoire programme vive et pour lire ledit programme de commande intégrée enregistré dans ladite carte mémoire programme vive lorsque ledit moment de consigne est atteint étant mémorisé dans ladite mémoire vive non volatile (5) ou dans ladite mémoire morte (4), pour ainsi étendre ledit programme de commande intégrée sur ladite mémoire vive.
